# EUROPEAN PATENT APPLICATION

(11) **EP 2 677 398 A2**
(43) Date of publication of application: **25.12.2013**
(21) Application number: 12746926.0
(22) Date of filing: 15.02.2012
(51) Int. Cl.: G06F 3/03, G06F 3/041, G06T 7/20

(54) **VIRTUAL TOUCH DEVICE WITHOUT POINTER ON DISPLAY SURFACE**

(30) Priority: 16.02.2011 KR 20110013840
(71) Applicant: VTouch Co., Ltd., Seoul 135-888 (KR)
(72) Inventor: KIM, Seok-Joong, Seoul 137-778 (KR)
(74) Representative: Fortuna, Jevgenijs
(86) International application number: PCT/KR2012/001137
(87) International publication number: WO 2012/111976

(57) **Abstract**

Provided is a virtual touch device for remotely controlling electronic equipment having a display surface. The virtual touch device includes a three-dimensional coordinate calculator and a controller. The three-dimensional coordinate calculator extracts a three-dimensional coordinate of a user's body. The controller includes a touch location calculation unit and a virtual touch processing unit. The touch location calculation unit calculates a contact point coordinate where a straight line connecting between a first spatial coordinate and a second spatial coordinate meets the display surface using the first and second spatial coordinates received from the three-dimensional coordinate calculator. The virtual touch processing unit creates a command code for performing an operation corresponding to the contact coordinate received from the touch location calculation unit and inputs the command code into a main controller of the electronic equipment.

## Description

### Technical Field

The present disclosure herein relates to a virtual touch device for remotely controlling electronic equipment, and more particularly, to a virtual touch device for exactly controlling electronic equipment remotely without displaying a pointer on a display surface of the electronic equipment.

### Background Art

Recently, electronic equipment such as smart phones including a touch panel is being widely used. Such a touch panel technology needs not to display 'a pointer' on a display unlike electronic equipment such as typical computers that is controlled by a mouse. For control of electronic equipment, a user locates his/her finger on icons and touches them without locating a pointer (e.g., a cursor of a computer) on a certain location (e.g., program icons). The touch panel technology enables quick control of electronic equipment because it does not require a 'pointer' that is essential to controlling typical electronic equipment.

However, since a user has to directly touch a display surface in spite of the above convenience of the touch panel technology, there is an intrinsic limitation in that the touch panel technology could not be used for remote control. Accordingly, for remote control, even electronic equipment using the touch panel technology has to depend on a device such as a typical remote controller.

A technology capable of generating a pointer on an exact point using a remote electronic equipment control apparatus like in the touch panel technology is disclosed. The technology includes photographing the front of a display using two cameras and then generating a pointer on a point where the straight line extending between the eye and finger of a user meets a display. However, the technology has an inconvenience in that a pointer has to be generated as a preliminary measure for control of electronic equipment (including a pointer controller) and then gestures of a user has to be compared with already-stored patterns for concrete operation control.

Korean Patent Publication No. 10-2010-0129629, published December 9, 2010.

### Disclosure of Invention

### Technical Problem

The present disclosure provides a convenient user interface for remote control of electronic equipment as if a user touched a touch panel surface. For this, the present disclosure provides a method capable of controlling electronic equipment without using a pointer on a display surface of the electronic equipment and exactly selecting a specific area on the display surface as if a user delicately touched a touch panel.

### Solution to Problem

Embodiments of the present invention provide virtual touch device without pointer on a display surface for remotely controlling electronic equipment having the display surface, including: a three-dimensional coordinate calculator extracting a three-dimensional coordinate of a user's body; and a controller comprising a touch location calculation unit calculating a contact point coordinate where a straight line connecting between a first spatial coordinate and a second spatial coordinate meets the display surface using the first and second spatial coordinates received from the three-dimensional coordinate calculator, and a virtual touch processing unit creating a command code for performing an operation corresponding to the contact coordinate received from the touch location calculation unit and inputting the command code into a main controller of the electronic equipment.

In some embodiments, the three-dimensional calculator may acquire the three-dimensional coordinate using time of flight.

In other embodiments, the three-dimensional calculator may comprise an image acquisition unit including two image sensors disposed at different locations and photographing a user's body at the front of the display surface; and a spatial coordinate calculation unit calculating three-dimensional coordinate data of the user's body from the photographed image from the image acquisition unit by using an optical triangulation method.

In other embodiments, the three-dimensional coordinate calculator may be configured to acquire the three-dimensional coordinate by projecting a coded pattern image on the user's body and processing an image on which structured light is projected.

In still other embodiments, the three-dimensional coordinate calculator may include: a lighting assembly comprising a light source and a light diffuser and projecting a speckle pattern on the user's body; an image acquisition unit comprising an image sensor to capture the speckle pattern projected on the user's body by the lighting assembly; and a spatial coordinate calculation unit for calculating the three-dimensional coordinate of the user's body from the captured speckle pattern.

In even other embodiments, the three-dimensional coordinate calculator may be disposed in plurality on different locations.

In yet other embodiments, the first spatial coordinate may be a three-dimensional coordinate of a tip of one user's finger or a tip of a pointer gripped by user's finger, and the second spatial coordinate may be a three-dimensional coordinate of a central point of one of user's eyes.

In further embodiments, when the virtual touch processing unit determines whether there is a change in the contact point coordinate for a predetermined time or more after the initial contact point coordinate is calculated and there is no change in the contact point coordinate for the predetermined time or more, the virtual touch processing unit may create a command code for performing an operation corresponding to the contact point coordinate, and may input the command code into the main controller of the electronic equipment.

In still further embodiments, when the virtual touch processing unit determines whether there is a change in the contact point coordinate for a predetermined time or more after the initial contact point coordinate is calculated and there is no change in the contact point coordinate for the predetermined time or more, and then the virtual touch processing unit determines whether there is a distance change between the first spatial coordinate and the second spatial coordinate beyond a predetermined distance and there is a distance change beyond the predetermined distance, the virtual touch processing unit may create a command code for performing an operation corresponding to the contact point coordinate, and may input the command code into the main controller of the electronic equipment.

In even further embodiments, when the change of the contact point coordinate is within a predetermined region of the display surface, the contact point coordinate may be determined as unchanged.

In yet further embodiments, the first spatial coordinate may include three-dimensional coordinates of tips of two or more fingers of one user, and the second spatial coordinate may include a three-dimensional coordinate of the central point of one of user's eyes.

In yet much further embodiments, the first spatial coordinate may include three-dimensional coordinates of tips of one or more fingers provided by two or more users, and the second spatial coordinate may include three-dimensional coordinates of the central points of one of both eyes of two or more users.

### Advantageous Effects of Invention

A virtual touch device according to an embodiment of the present invention has the following advantages.

A virtual touch device according to an embodiment of the present invention enables prompt control of electronic equipment without using a pointer on a display. Accordingly, the present invention relates to a device that can apply the above-mentioned advantages of a touch panel to remote control apparatuses for electronic equipment. Generally, electronic equipment such as computers and digital televisions may be controlled by creating a pointer on a corresponding area, and then performing a specific additional operation. Also, most technologies have been limited to application technologies using a pointer such as a method for quickly setting the location of a display pointer, a method for selecting the speed of a pointer on a display, a method for using one or more pointers, and a method for controlling a pointer using a remote controller.

Also, a user can delicately locate a pointer on a specific area on a display surface of electronic equipment.

For delicate pointing on a display surface of electronic equipment, a virtual touch device adopts a principle in which the location of object can be exactly pointed using a tip and a finger and only one eye (the tip of finger appears two when viewed by both eyes). Thus, a user can delicately point a menu on a remote screen as if the user used a touch panel.

### Brief Description of Drawings

FIG. 1 is a block diagram illustrating a virtual touch device according to an exemplary embodiment of the present invention;

FIG. 2A is a diagram illustrating selecting of a screen menu on a display by a user;

FIG. 2B is a diagram illustrating a submenu on a display of electronic equipment;

FIG. 2C is a diagram illustrating selecting of a submenu on a display by a user;

FIG. 3A is a diagram illustrating a first spatial coordinate and a second spatial coordinate maintained by a user for a certain time;

FIG. 3B is a diagram illustrating a tip of a finger moved by a user in a direction of an initial contact point coordinate;

FIG. 3C is a diagram illustrating a tip of a finger moved by a user in a direction of a second spatial coordinate;

FIG. 4 is a diagram illustrating a touch operation using tips of two fingers of one user;

FIG. 5 is a diagram illustrating a touch operation using tips of respective fingers of two users; and

### Mode for the Invention

The accompanying drawings provide a further understanding of exemplary embodiments of the present invention.

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

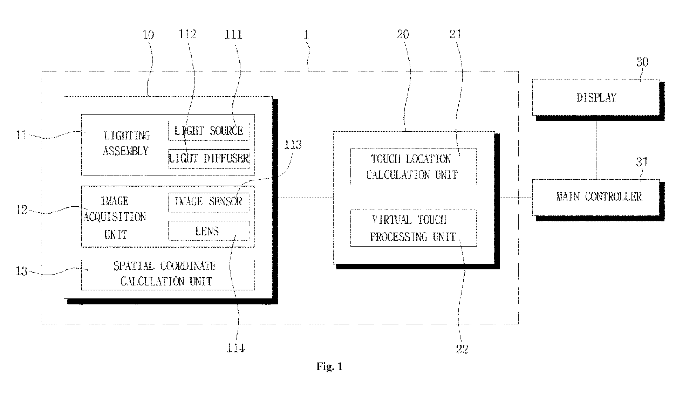

FIG. 1 is a block diagram illustrating a virtual touch device according to an exemplary embodiment of the present invention. Referring to FIG. 1, a virtual touch device 1 may include a three-dimensional coordinate calculator 10 extracting three-dimensional coordinate data of a user's body and a controller 20.

The three-dimensional calculator 10 may calculate the three-dimensional coordinate of the user's body using various three-dimensional coordinate extraction methods that are known. Examples of three-dimensional coordinate extraction methods may include optical triangulations and time delay measurements. A three-dimensional information acquisition technique, which is an active method using structured light as one of the optical triangulations, may estimate a three-dimensional location by continuously projecting coded pattern images using a projector and obtaining images on which the structured light is projected using a camera.

The time delay measurement may be a technique that obtains three-dimensional information using a distance converted by dividing the time of flight taken for an ultrasonic wave from a transmitter to be reflected by an object and reach a receiver by a travelling speed of the ultrasonic wave. Since there are various three-dimensional coordinate calculation methods using the time of flight, which can be easily by those skilled in the art, a detailed description thereof will be omitted herein.

A three-dimensional coordinate calculator (not shown in FIG. 1) may include an image acquisition unit and a spatial coordinate calculation unit. An image acquisition may include two or more image sensors such as CCD or CMOS. The image sensors are a sort of camera module and detect and convert an image into an electrical image signal. The spatial coordinate calculation unit may calculate three-dimensional coordinate data of a user's body using the image received from the image acquisition unit. In this embodiment, the image sensor constituting the image acquisition unit may photograph the user's body at different angles, and the spatial coordinate calculation unit may calculate the three-dimensional coordinate data of the user's body using a optical triangulation method.

Also, the three-dimensional coordinate calculator 10 may include a lighting assembly 11, an image acquisition unit 12, and a spatial coordinate calculation unit 13. The lighting assembly 12 may include a light source 111 and a light diffuser 112, and may project a speckle pattern on a user's body. The image acquisition unit 12 may include an image sensor 121 and a lens 122 to capture the speckle pattern on the user's body projected by the lighting assembly 12. The image sensor 121 may include a CCD or CMOS image sensor. Also, the spatial coordinate calculation unit 13 may serve to calculate three-dimensional data of the user's body by processing the images that the image acquisition unit 12 has acquired.

The controller 20 may include a touch location calculation unit 21 and a virtual touch processing unit 22.

The touch location calculation unit 21 may serve to calculate a contact point coordinate where a straight line connecting between a first spatial coordinate and a second spatial coordinate that are received from the three-dimensional coordinate calculation unit 10 meets a display surface.

Generally, fingers of human body are the only part that can perform an elaborate and delicate manipulation. Particularly, thumb and/or index finger can perform a delicate pointing operation. Accordingly, it may be very effective to use tips of thumb and/or index finger as the first spatial coordinate.

In a similar context, a pointer (e.g., tip of pen) having a sharp tip and gripped by a hand may be used instead of the tip of finger serving as the first spatial coordinate. When such a pointer is used, a portion blocking user's view becomes smaller and more delicate pointing can be performed compared to the tip of finger.

Also, the central point of only one eye of a user may be used in this embodiment. For example, when a user views his/her index finger at the front of his/her eyes, the index finger may appear two. This is because the shapes of the index finger viewed by both eyes are different from each other (i.e., due to an angle difference between both eyes). However, when the index finger is viewed by only one eye, the index finger may be clearly seen. Also, although a user does not close one of eyes, when he views the index finger using only one eye consciously, the index finger can be clearly seen. Aiming at a target with only one eye in archery and shooting that require a high degree of accuracy uses the above principle.

In this embodiment, a principle that the shape of the tip of finger (first spatial coordinate) can be clearly recognized when viewed by only one eye may be applied. Thus, when a user can exactly view the first spatial coordinate, a specific area of a display corresponding to the first spatial coordinate can be pointed.

When one user uses one of his/her fingers, the first spatial coordinate may be the three-dimensional coordinate of the tip of one of the fingers or the tip of a pointer gripped by the fingers of the user, and the second spatial coordinate may be the three-dimensional coordinate of the central point of one of the user's eyes.

Also, when one user uses two or more fingers, the first spatial coordinate may include the three-dimensional coordinates of the tips of one or more fingers provided by two or more users, respectively, and the second spatial coordinate may include the three-dimensional coordinates of the central points of one of eyes of the user.

When there are two or more users, the first spatial coordinate may include the three-dimensional coordinates of the tips of one or more fingers provided by two or more users, respectively, and the second spatial coordinate may include the three-dimensional coordinates of the central points of one of eyes of two of more the users.

In this embodiment, the virtual touch processing unit 22 may determine whether there is a change in the contact point coordinate for a predetermined time or more after the initial contact point coordinate is calculated. If there is no change in the contact point coordinate for the predetermined time or more, the virtual touch processing unit 22 may create a command code for performing an operation corresponding to the contact point coordinate, and may input the command code into a main controller 31 of the electronic equipment. The virtual processing unit 22 may similarly operate in the case of one user using two fingers or two users.

Also, when the virtual touch processing unit 22 determines whether there is a change in the contact point coordinate for a predetermined time or more after the initial contact point coordinate is calculated and there is no change in the contact point coordinate for the predetermined time or more, and then the virtual touch processing unit 22 determines whether there is a distance change between the first spatial coordinate and the second spatial coordinate beyond a predetermined distance and there is a distance change beyond the predetermined distance, the virtual touch processing unit 22 may create a command code for performing an operation corresponding to the contact point coordinate, and may input the command code into the main controller 31 of the electronic equipment. The virtual processing unit 22 may similarly operate in the case of one user using two fingers or two users.

On the other hand when it is determined that the change of the contact point coordinate is within a predetermined region of the display 30, it may be considered that there is no change in the contact point coordinate. Since a slight movement or tremor of finger or body occurs when a user points the tip of finger or pointer on the display 30, it may be very difficult to maintain the contact point coordinate. Accordingly, when the values of the contact point coordinate exist within the predetermined region of the display 30, it may be considered that there is no change in the contact point coordinate, thereby allowing a command code for performing a predetermined operation to be generated and inputted into the main controller 31 of the electronic equipment.

Electronic equipment subject to remote control according to an embodiment may include digital televisions as a representative example. Generally, a digital television receiver may include a broadcasting signal receiving unit, an image signal processing unit, and a system control unit, but these components are well known to those skilled in the art. Accordingly, a detailed description thereof will be omitted herein. Examples of electronic equipment subject to remote control according to an embodiment may further include home appliances, lighting appliances, gas appliances, heating apparatuses, and the like, which constitute a home networking.

The virtual touch device 1 according to an embodiment of the present invention may be installed on the frame of electronic equipment, or may be installed separately from electronic equipment.

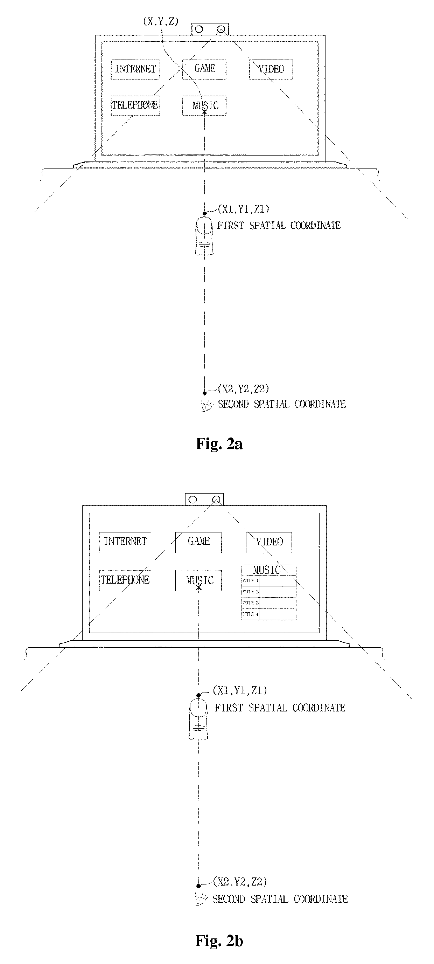

FIG. 2A is a diagram illustrating selecting of a screen menu on a display 30 by a user according to an embodiment of the present invention. A user may select a 'music' icon on the display 30 while viewing the tip of a finger with one eye. The three-dimensional coordinate calculator 10 may generate a three-dimensional spatial coordinate of the user's body. The touch location calculation unit 21 of the controller 20 may process a three-dimensional coordinate (X1, Y1, Z1) of the tip of finger and a three-dimensional coordinate (X2, Y2, Z2) of the central point of one eye to calculate a contact point coordinate (X, Y, Z) between the display surface 30 and the extension line of the three-dimensional coordinates (X1, Y1, Z2) and (X2, Y2, Z2). Thereafter, the virtual touch processing unit 22 may create a command code for performing an operation corresponding to the contact point coordinate (X, Y, Z), and may input the command code into the electronic equipment. The main controller 31 may control a result of execution of the command code to be displayed on the display 30. In FIG. 2A, the 'music' icon has been selected as an example.

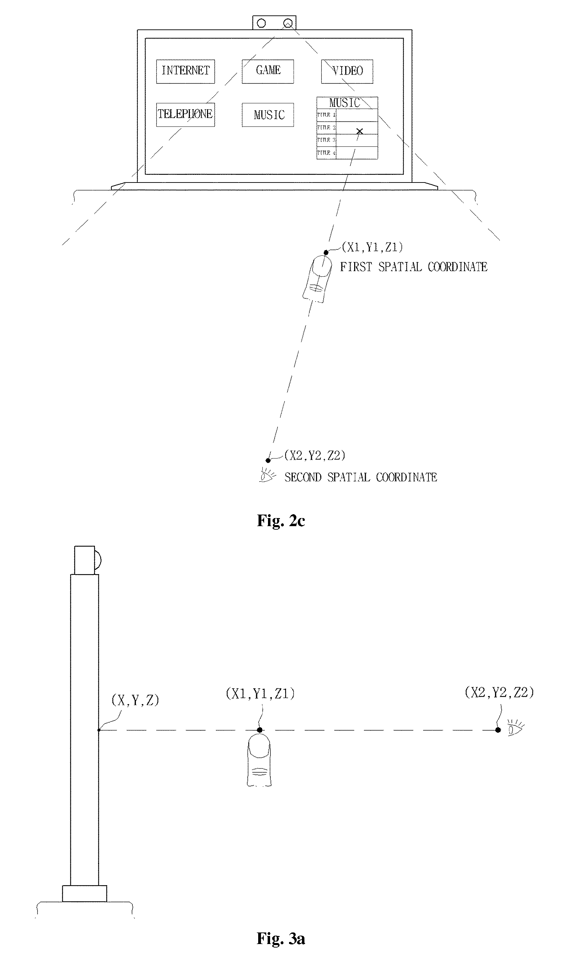

FIG. 2B is a diagram illustrating a screen displaying a submenu showing a list of music titles after the selection of the 'music' icon in FIG. 2A. FIG. 2C is a diagram illustrating selecting of a specific music from the submenu by a user.

FIGS. 3A through 3C are diagrams illustrating a method of creating a command code for performing an operation corresponding to a contact point coordinate (X, Y, Z) on the display surface 30 and inputting the command code into the main controller 31 of the electronic equipment by the touch location calculation unit 21 only when a three-dimensional coordinate (X1, Y1, Z1) of the tip of finger and a three-dimensional coordinate (X2, Y2, Z2) of the central point of one eye meets a certain condition (change of the coordinate value Z).

In FIG. 3A, the touch location calculation unit 21 may determine whether there is a change in the contact point coordinate for a predetermined time or more after an initial contact point coordinate is calculated. Only when there is no change in the contact point coordinate for the determined time or more, the touch location calculation unit 21 may create a command code for performing an operation corresponding to the contact point coordinate and may input the command code to the main controller 31 of the electronic equipment.

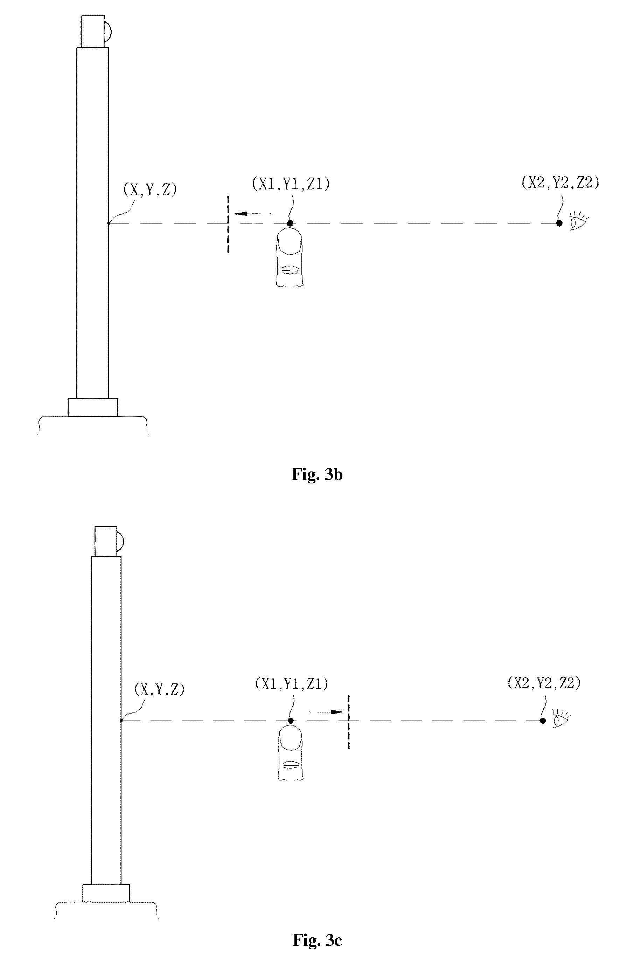

In FIGS. 3B and 3C, when the virtual touch processing unit 22 determines whether there is a change in the contact point coordinate for a predetermined time or more after the initial contact point coordinate is calculated and there is no change in the contact point coordinate (coordinate values X and Y) for the predetermined time or more, and then the virtual touch processing unit 22 determines whether there is a distance change between the first spatial coordinate and the second spatial coordinate beyond a predetermined distance and there is a distance change beyond the predetermined distance, the virtual touch processing unit 22 may create a command code for performing an operation corresponding to the contact point coordinate, and may input the command code into the main controller 31 of the electronic equipment. FIG. 3B illustrates a case where the distance between the first spatial coordinate and the second spatial coordinate becomes greater, and FIG. 3C illustrates a case where the distance between the first spatial coordinate and the second spatial coordinate becomes smaller.

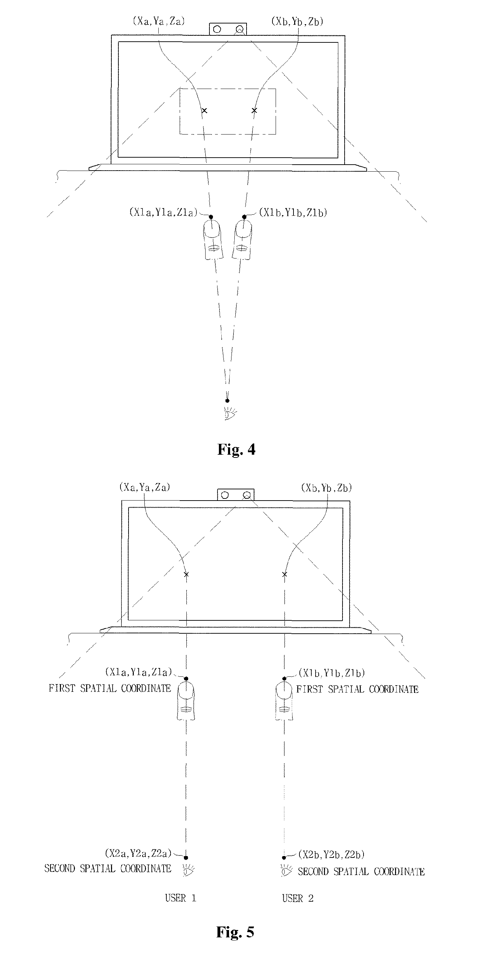

FIG. 4 illustrates a case where one user designates two contact point coordinates (Xa, Ya, Za) and (Xb, Yb, Zb) on a display surface of electronic equipment using two fingers. An example of controlling an operation of electronic equipment using two contact point coordinates on a display surface may be common in the computer game field. Also, when a user uses the tips of two fingers, it is very useful to control (move, rotate, reduce, and enlarge) an image on the display surface.

FIG. 5 illustrates a case where two users designate two contact point coordinates (Xa, Ya, Za) and (Xb, Yb, Zb) on a display surface of electronic equipment using the tip of one finger, respectively. An example of controlling an operation of electronic equipment using two contact point coordinates by two users may be common in the game field.

## Claims

1. A virtual touch device without pointer on a display surface for remotely controlling electronic equipment having the display surface, comprising:
a three-dimensional coordinate calculator extracting a three-dimensional coordinate of a user's body; and
a controller comprising a touch location calculation unit calculating a contact point coordinate where a straight line connecting between a first spatial coordinate and a second spatial coordinate meets the display surface using the first and second spatial coordinates received from the three-dimensional coordinate calculator, and a virtual touch processing unit creating a command code for performing an operation corresponding to the contact coordinate received from the touch location calculation unit and inputting the command code into a main controller of the electronic equipment.

2. The virtual touch device of claim 1, wherein the three-dimensional calculator acquires the three-dimensional coordinate using time of flight.

3. The virtual touch device of claim 1, wherein the three-dimensional calculator may comprise an image acquisition unit including two image sensors disposed at different locations and photographing a user's body at the front of the display surface; and a spatial coordinate calculation unit calculating three-dimensional coordinate data of the user's body from the photographed image from the image acquisition unit by using an optical triangulation method.

4. The virtual touch device of claim 1, wherein the three-dimensional coordinate calculator is configured to acquire the three-dimensional coordinate by projecting a coded pattern image on the user's body and processing an image on which structured light is projected.

5. The virtual touch device of claim 4, wherein the three-dimensional coordinate calculator comprises:
a lighting assembly comprising a light source and a light diffuser and projecting a speckle pattern on the user's body;
an image acquisition unit comprising an image sensor to capture the speckle pattern projected on the user's body by the lighting assembly; and
a spatial coordinate calculation unit for calculating the three-dimensional coordinate of the user's body from the captured speckle pattern.

6. The virtual touch device of claim 1, wherein the three-dimensional coordinate calculator is disposed in plurality on different locations.

7. The virtual touch device of any one of claims 1, wherein the first spatial coordinate is a three-dimensional coordinate of a tip of one user's finger or a tip of a pointer gripped by user's finger, and the second spatial coordinate is a three-dimensional coordinate of a central point of one of user's eyes.

8. The virtual touch device of claim 7, wherein when the virtual touch processing unit determines whether there is a change in the contact point coordinate for a predetermined time or more after the initial contact point coordinate is calculated and there is no change in the contact point coordinate for the predetermined time or more, the virtual touch processing unit creates a command code for performing an operation corresponding to the contact point coordinate, and inputs the command code into the main controller of the electronic equipment.

9. The virtual touch device of claim 7, wherein, when the virtual touch processing unit determines whether there is a change in the contact point coordinate for a predetermined time or more after the initial contact point coordinate is calculated and there is no change in the contact point coordinate for the predetermined time or more, and then the virtual touch processing unit determines whether there is a distance change between the first spatial coordinate and the second spatial coordinate beyond a predetermined distance and there is a distance change beyond the predetermined distance, the virtual touch processing unit creates a command code for performing an operation corresponding to the contact point coordinate, and inputs the command code into the main controller of the electronic equipment.

10. The virtual touch device of claim 8, wherein, when the change of the contact point coordinate is within a predetermined region of the display surface, the contact point coordinate is determined as unchanged.

11. The virtual touch device of claims 9, wherein, when the change of the contact point coordinate is within a predetermined region of the display surface, the contact point coordinate is determined as unchanged.

12. The virtual touch device of claims 1, wherein the first spatial coordinate comprises three-dimensional coordinates of tips of two or more fingers of one user, and the second spatial coordinate comprises a three-dimensional coordinate of the central point of one of user's eyes.

13. The virtual touch device of claim 1, wherein the first spatial coordinate comprises three-dimensional coordinates of tips of one or more fingers provided by two or more users, and the second spatial coordinate comprises three-dimensional coordinates of the central points of one of both eyes of two or more users.
